Europäisches Patentamt

European Patent Office

Office européen des brevets

(11) Veröffentlichungsnummer: **0 171 609**
**A2**

# (12) EUROPÄISCHE PATENTANMELDUNG

(21) Anmeldenummer: 85108654.6

(22) Anmeldetag: 11.07.85

(51) Int. Cl.⁴: **B 29 C 45/80**
**B 29 C 45/77**

(30) Priorität: 14.08.84 DE 3429873

(43) Veröffentlichungstag der Anmeldung:
19.02.86 Patentblatt 86/8

(84) Benannte Vertragsstaaten:
AT CH FR GB IT LI NL

(71) Anmelder: Mannesmann Demag Kunststofftechnik
Zweigniederlassung der Mannesmann Demag
Aktiengesellschaft
Altdorfer Strasse 15
D-8501 Schwaig(DE)

(72) Erfinder: Schirmer, Karl, Dipl.-Ing.
Laurentiusstrasse 12c
D-8500 Nürnberg(DE)

(74) Vertreter: LOUIS, PÖHLAU, LOHRENTZ & SEGETH
Kesslerplatz 1 P.B. 3055
D-8500 Nürnberg(DE)

(54) Einrichtung zur Steuerung und/oder Begrenzung der Formauftriebskraft an Spritzgiessmaschinen.

(57) Eine Einrichtung zur Steuerung und/oder Begrenzung der Formauftriebskraft an Spritzgießmaschinen, bei denen das Einspritzelement (2) durch einen hydraulischen Spritzkolben (12) axial verschiebbar ist, der seinerseits beim Spritzhub des Einspritzgelements (2) über ein steuerbares Ventil (16) durch einen Druckspeicher (14) beaufschlagbar ist. Die Einrichtung umfasst ein Meßelement (20), das ein zur Formauftriebskraft analoges Signal (21) abgibt, und einen Komparator (22), der das Signal (21) mit einem an dem Komparator voreingestellten zulässigen Wert (23) für die Formauftriebskraft vergleicht und bei einem Überschreiten dieses Wertes ein der Signaldifferenz proportionales Steuersignal (24) an das Proportional-Drosselventil (16) zur entsprechenden Verringerung von dessen Durchflußquerschnitt abgibt.

EP 0 171 609 A2

Croydon Printing Company Ltd.

0171609

- 1-

--------------------------------------------------------------------

Einrichtung zur Steuerung und/oder Begrenzung der Formauftriebskraft an Spritzgießmaschinen

--------------------------------------------------------------------

Die Erfindung betrifft eine Einrichtung zur Steuerung und/
oder Begrenzung der Formauftriebskraft an Spritzgießmaschinen, bei denen das Einspritzelement (Schnecke oder
Kolben) durch einen hydraulischen Spritzkolben axial verschiebbar ist, der seinerseits beim Spritzhub des Einspritzelements über ein steuerbares Ventil durch einen Druckspeicher beaufschlagbar ist.

Insbesondere bei der Herstellung von dünnwandigen Kunststoffteilen, z.B. Verpackungsgut wie Eimern, Automaten-
Trinkbechern und dgl., kommen hohe Einspritzdrücke zur
Anwendung. Zugleich ist auch eine hohe Einspritzgeschwindigkeit erforderlich, um zu gewährleisten, daß die Fließfront
der Schmelze nicht durch vorzeitige Abkühlung gestoppt wird,
wodurch unbrauchbare Teile entstehen würden.

Die hohen Einspritzdrücke werden an Spritzgießmaschinen
der vorstehend genannten Art üblicherweise mit Hilfe eines
hydraulischen Druckspeichers erzielt, der beim Spritzhub
entweder zusätzlich zu einer Hydraulikpumpe oder ausschließlich dem hydraulischen Spritzkolben aufgeschaltet wird.
Der Druckspeicher, der ein Kolben- oder Blasenspeicher
sein kann, enthält Hydraulikmedium, das durch ein Gaspolster

0171609

unter einem Druck in der Grössenordnung von etwa 180 bar steht und zu Beginn des Einspritzhubes über ein steuerbares Ventil in den Zylinder des Spritzkolbens einströmt. Zu diesem Zweck kann das Ventil entweder von der Schließstellung in eine Offenstellung geschaltet werden; es ist aber auch bekannt, den Öffnungshub des Ventils durch die Steuerung der Spritzgießmaschine während des Einspritzhubes so zu verändern, daß ein bestimmter Verlauf der Bewegungsgeschwindigkeit des Einspritzelementes über dem Einspritzhub erzielbar ist. Durch den an dem Spritzkolben mittels des Druckspeichers angelegten Druck erfolgt der Einspritzhub etwa mit einer Geschwindigkeit des Einspritzelements von 600 mm/sec., d.h. in einer Gesamtdauer von weniger als 0,3 Sekunden.

Der Druck, unter dem die Kunststoffschmelze beim Einspritzvorgang steht, erzeugt auf der in Schließrichtung projizierten Innenfläche des Formwerkzeuges eine Auftriebskraft, die der Formzuhaltekraft entgegenwirkt und dazu neigt, die Formwerkzeughälften voneinander zu trennen. Übersteigt die hierdurch bewirkte Formauftriebskraft die von der Schließvorrichtung erzeugte Zuhaltekraft, so daß es zu einem "Atmen" des Formwerkzeuges in der Trennebene kommt, so entstehen hierdurch nicht nur mangelhafte Teile, die Grate aufweisen, sondern es kann vor allem zu gravierenden Beschädigungen des Formwerkzeuges an den Trennflächen der Werkzeughälften kommen. Gerade bei dünnwandigen Gießteilen der vorstehend besprochenen Art, die hohe Einspritzdrücke erfordern, erfordert das Einstellen der Spritzgießmaschine besondere Sorgfalt und ist daher langwierig, und es besteht trotzdem aufgrund der im Betrieb unvermeidlichen Schwankungen bezüglich Maschinentemperatur, Viskosität der Kunststoffschmelze usw. die Gefahr eines "Überspritzens" des Formwerkzeuges mit den geschilderten nachteiligen Folgen.

Der Erfindung liegt deshalb die Aufgabe zugrunde, eine einfach aufgebaute Einrichtung an Spritzgießmaschinen der genannten Art zu schaffen, die einen Betrieb der Spritzgießmaschine mit den höchstmöglichen Einspritzdrücken zulässt, jedoch das Überspritzen des Formwerkzeuges verhindert und die Einstellung der Spritzgießmaschine erleichtert.

Hierzu weist die erfindungsgemässe Einrichtung zur Steuerung und/oder Begrenzung der Formauftriebskraft ein Meßelement auf, das ein zur Formauftriebskraft analoges Signal abgibt, und einen Komparator, der das Signal mit einem an dem Komparator voreingestellten zulässigen Wert für die Formauftriebskraft vergleicht und bei einem Überschreiten dieses Wertes ein Steuersignal an das - zwischen dem Druckspeicher und dem Spritzkolben liegende - Ventil zur Verringerung von dessen Durchflußquerschnitt um ein vorbestimmtes Maß abgibt.

Die wesentlichen Komponenten der erfindungsgemässen Einrichtung sind somit das Meßelement, der Komparator und das durch das Steuersignal des Komparators - vorzugsweise proportional - steuerbare Ventil, dessen Durchflußquerschnitt für das zum Spritzkolben strömende Hydraulikmedium in dem Moment verringert wird, sobald das vom Komparator abgegebene Steuersignal anzeigt, daß der zulässige Grenzwert für die Formauftriebskraft überschritten ist. Da der Einspritzhub, wie vorstehend erläutert, innerhalb von Bruchteilen von Sekunden abläuft, muß dementsprechend das Ventil eine so kurze Ansprechzeit haben, daß es aufgrund des vom Komparator stammenden Steuersignals während des Einspritzhubes genügend schnell reagieren und den Druckverlauf am Spritzkolben und damit in der Kunststoffschmelze beeinflussen kann. Zweckmässigerweise wird hierzu ein Ventil eingesetzt, dessen Stellhub nicht mehr als 50 Millisekunden erfordert.

0171609

Das Meßelement kann überall an der Spritzgießmaschine angebracht sein, wo es möglich ist, eine analoge Grösse für die Formauftriebskraft zu ermitteln. Beispielsweise ist hierzu ein Druckgeber verwendbar, der in der Formhöhlung des Formwerkzeuges selbst angeordnet ist und den Druck der Kunststoffschmelze ermittelt. In diesem Fall ist es naturgemäß notwendig, den zulässigen Grenzwert für diesen Druck unter Einbeziehung der jeweiligen Projektionsfläche der Formhöhlung festzulegen und am Komparator entsprechend einzustellen. Das Meßelement kann aber auch an den Holmen oder an einem Teil der Formschließvorrichtung angeordnet sein, sofern diese bzw. dieses im Kraftfluß der Formauftriebskraft liegt. Das ist bei mechanischen Formschließvorrichtungen, z.B. Kniehebel-Formschließvorrichtungen, der Fall, da hierbei die Zugspannung in den Holmen bzw. in der Endplatte der Formschließvorrichtung über den der Formzuhaltekraft entsprechenden Wert hinaus durch die Formauftriebskraft vergrössert wird. Als Meßelement können Dehnmeßstreifen und dgl. dienen; auch eine Einrichtung gemäß der DE-OS 29 28 940 ist geeignet.

Der am Komparator voreingestellte zulässige Wert für die Formauftriebskraft kann entweder ein konstanter Grenzwert sein, der nicht überschritten werden darf. Insoweit ist die erfindungsgemässe Einrichtung eine solche zur Begrenzung der Formauftriebskraft. Der zulässige Wert kann aber auch an dem Komparator in Form einer über dem Einspritzhub zeit- oder wegabhängig veränderlichen Funktion anliegen, wenn gewünscht sein sollte, den zulässigen Wert veränderlich zu halten. In der Regel wird es allerdings wünschenswert sein, den Einspritzvorgang mit dem maximal zulässigen konstanten Grenzwert ablaufen zu lassen.

Es ist zweckmässig, die Höhe des Steuersignals vom Komparator proportional zu der Grösse der Differenz zwischen dem vor-

0171609

eingestellten zulässigen Wert und der tatsächlich herrschenden Formauftriebskraft einzustellen und dementsprechend auch den Hub des Ventils zu verändern. Damit lässt sich erreichen, daß bei einem stärkeren Überschreiten der Zulässigkeitsgrenze für die Formauftriebskraft entsprechend auch ein stärkeres Absteuern des Ventils erfolgt, um einen entsprechend steilen, d.h. raschen Druckabfall in der Kunststoffschmelze zu bekommen. Das kann im Extrem zu einem vollständigen Abschalten der Verbindung zwischen dem Druckspeicher und dem Spritzkolben führen, wenn, z.B. aufgrund einer Fehlfunktion oder kraß fehlerhafter Einstellung, der Einspritzdruck sehr rasch über den zulässigen Wert ansteigen sollte.

Die erfindungsgemässe Einrichtung kann auch an Spritzgießmaschinen vorgesehen werden, deren Funktionsablauf numerisch gesteuert ist oder die z.B. die eingangs erwähnte Geschwindigkeitssteuerung des Einspritzelements über das steuerbare Ventil beinhalten. Es versteht sich jedoch, daß die Einrichtung zur Steuerung und/oder Begrenzung der Formauftriebskraft in einem solchen Fall im Vorrang zu der Grundsteuerung geschaltet sein muß, um wirksam zu sein.

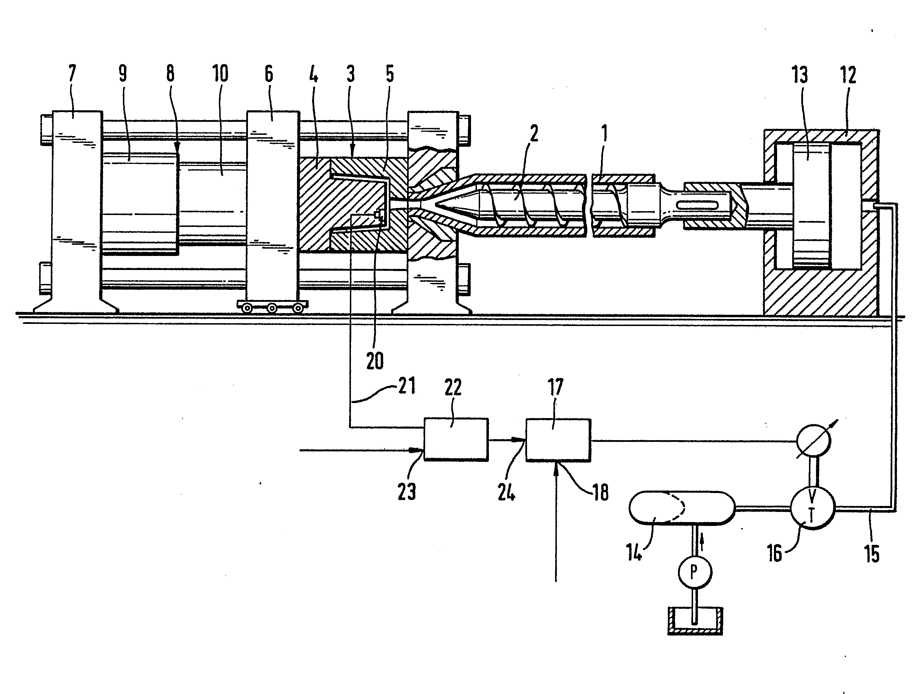

Ein Ausführungsbeispiel der Erfindung ist nachfolgend anhand der beiliegenden Zeichnung näher erläutert.

Die Zeichnung zeigt rein schematisch, teilweise im Längsschnitt, eine Schnecken-Spritzgießmaschine für Kunststoffe. Diese beinhaltet einen Spritzzylinder 1 mit einer darin rotierend und axial verschiebbar angeordneten Schnecke 2, ein Formwerkzeug 3 zur Herstellung eines eimerförmigen Gießteils mit den Formhälften 4 und 5, eine bewegliche Formaufspannplatte 6 und eine feststehende Endplatte 7, zwischen denen eine hydraulische Formschließvorrichtung 8 mit einem Zylinder 9 und einem auf die bewegliche Formauf-

0171609

spannplatte 6 wirkenden Kolben 10 angeordnet ist. Für die Druckbeaufschlagung der Schnecke 2 in axialer Richtung beim Einzugs-Rückhub und für deren axiale Verschiebung beim Einspritzhub ist ein in einem Zylinder 12 verschiebbarer Spritzkolben 13 mit der Schnecke 2 verbunden, der über eine nicht gezeigte Hydraulikpumpe sowie von einem Blasen-Druckspeicher 14 über eine Leitung 15 mit Druckmittel beaufschlagt werden kann. In der Leitung 15 liegt ein steuerbares Proportional-Drosselventil 16, das durch eine nur schematisch angedeutete Steuerung 17 in Abhängigkeit von der Maschinen-Programmsteuerung (Grundeinstellung) gesteuert ist. Letztere ist nur mit dem Eingang 18 zur Steuerung 17 angedeutet.

Spritzgießmaschinen dieses Aufbaues und mit einer entsprechenden Steuerung sind bekannt und bedürfen hier keiner näheren Erläuterung.

Die erfindungsgemässe Einrichtung zur Steuerung und/oder Begrenzung der zwischen den Formhälften 4 und 5 beim Einspritzhub der Schnecke 2 wirksamen Formauftriebskraft beinhaltet einen in der Formhöhlung des Formwerkzeuges 3 angeordneten Druckgeber 20, der ein dem gemessenen Druck analoges Signal 21, beispielsweise in Form einer Spannung, an einen Komparator 22 gibt. An dem Komparator 22 liegt über einen Eingang 23, ebenfalls in Form einer Spannung, ein Signal an, das einem vorgegebenen Grenzwert für die Formauftriebskraft entspricht. Der Komparator 22 ist über einen Eingang 24 mit der Steuerung 17 für das Ventil 16 verbunden.

Das ständig am Komparator 22 anliegende und den Grenzwert für den Druck in der Formhöhlung repräsentierende Signal 23 wird - unter Berücksichtigung der Projektionsfläche der Formhöhlung - am Komparator 22 voreinstellt und entspricht

0171609

dem Grenzdruck, der ohne eine Gefahr für ein Überspritzen des Formwerkzeuges 3 nicht überschritten werden darf. Zu Beginn des Einspritzhubes der Schnecke 2 wird das Ventil 16 über die Steuerung 17, veranlasst durch die Maschinensteuerung, voll aufgesteuert, so daß Druckmedium aus dem Druckspeicher 14 dem Zylinder 12 zugefördert wird. Infolge des auf den Spritzkolben 13 hierdurch wirkenden hohen Druckes wird die Schnecke nach vorne verschoben und drückt Kunststoffschmelze in die Formhöhlung des Formwerkzeuges 3. Der hierbei von der Kunststoffschmelze ausgeübte, in der Formhöhlung 3 herrschende Druck wird vom Druckgeber 20 aufgenommen und als Drucksignal 21 an den Komparator 22 gegeben. Stellt der Komparator fest, daß das Drucksignal 21 grösser als das voreingestellte Signal 23 ist, so gibt er an die Steuerung 17 über den Eingang 24 ein in seiner Höhe der Signaldifferenz entsprechendes Steuersignal 24. Entsprechend der Grösse des Steuersignals 24 steuert die Steuerung 17 den Hub, d.h. den Durchflußquerschnitt, des Ventils 16 ab, so daß vom Druckspeicher 14 in den Zylinder 12 eine entsprechend geringere Druckmediummenge in der Zeiteinheit gelangt. Hierdurch nimmt die Einspritzgeschwindigkeit der Schnecke 2 ab, so daß Kunststoffschmelze in entsprechend geringerem Ausmaß in die Formhöhlung gelangt und der Druck darin unter den zulässigen Wert absinkt. Ist ein zulässiger Wert erreicht, so übernimmt wieder die Maschinensteuerung über den Eingang 18 die weitere Betätigung des Ventils 16. Wenn die Signaldifferenz zwischen den Signalen 21 und 23, z.B. aufgrund einer fehlerhaften Einstellung, besonders groß ist, so kann das Ventil 16 bis zur Schließstellung abgesteuert werden, so daß der Einspritzvorgang schlagartig unterbrochen wird.

Die geschilderte Überwachung der Formauftriebskraft erfolgt während des ganzen Einspritzhubes. Erst zu Beginn der Nachdruckzeit wird sie durch die Maschinensteuerung abgeschaltet.

Voraussetzung für die beschriebene Funktion der Einrichtung ist naturgemäß ein ausreichend schnelles Ansprechen der verschiedenen Bausteine wie Druckgeber 20, Komparator 22, Steuerung 17 und Ventil 16. Entsprechende Bausteine sind jedoch auf dem Markt vorhanden. Die einzelnen elektronischen Bausteine der erfindungsgemässen Einrichtung bedürfen an dieser Stelle auch keiner detaillierten Erläuterung, da ihr Aufbau für den Meß- und Regeltechniker klar ist.

Durch die beschriebene Begrenzung der Formauftriebskraft können Beschädigungen des Formwerkzeuges 3 sicher vermieden werden und es lassen sich hochwertige Spritzteile erzielen, da die Spritzgießmaschine optimal gemäß ihrer maximalen Formzuhaltekraft betrieben werden kann.

Auch wird der Einstellvorgang, d.h. die anfängliche Mengendosierung des Kunststoffes, sehr vereinfacht, da die Spritzgießmaschine die einzuspritzende Menge an Kunststoffschmelze über die durch die erfindungsgemässe Einrichtung immer am zulässigen Grenzwert gehaltene Einspritzgeschwindigkeit selbst bestimmt. Dabei werden auch im Betrieb unvermeidbare Schwankungen ausgeglichen, die von Änderungen im Rohmaterial, in der Maschinentemperatur usw. herrühren.

Die Einrichtung lässt sich auch an CNC-gesteuerten Spritzgießmaschinen einsetzen, wobei der am Komparator 22 voreingestellte Wert 23 dann ein Teil der Dateneingabe ist.

0171609

- 1 -

Patentansprüche:

1. Einrichtung zur Steuerung und/oder Begrenzung der Formauftriebskraft an Spritzgießmaschinen, bei denen das Einspritzelement durch einen hydraulischen Spritzkolben axial verschiebbar ist, der seinerseits beim Spritzhub des Einspritzelements über ein steuerbares Ventil durch einen
Druckspeicher beaufschlagbar ist, gekennzeichnet durch
ein Meßelement (20), das ein zur Formauftriebskraft analoges
Signal (21) abgibt, und durch einen Komparator (22), der
das Signal (21) mit einem an dem Komparator (22) voreingestellten zulässigen Wert (23) für die Formauftriebskraft
vergleicht und bei einem Überschreiten dieses Wertes ein
Steuersignal (24) an das Ventil (16) zur Verringerung von
dessen Durchflußquerschnitt um ein vorbestimmtes Maß abgibt.

2. Einrichtung nach Anspruch 1, dadurch gekennzeichnet, daß
das Meßelement ein im Formwerkzeug (3) angeordneter Druckgeber (20) ist.

3. Einrichtung nach Anspruch 1, dadurch gekennzeichnet, daß
das Meßelement an einem im Kraftfluß liegenden Teil der
Formschließvorrichtung der Spritzgießmaschine angebracht ist.

4. Einrichtung nach einem der Ansprüche 1 bis 3, dadurch gekennzeichnet, daß der an dem Komparator (22) voreingestellte Wert (23) für die Formauftriebskraft ein konstanter Wert ist.

5. Einrichtung nach einem der Ansprüche 1 bis 5, dadurch gekennzeichnet, daß das Steuersignal (24) des Komparators (22) proportional zur Grösse der Differenz zwischen dem voreingestellten Wert (23) der Formauftriebskraft und dem Signal (21) des Meßelements (20) ist.

0171609